Europäisches Patentamt

European Patent Office

Office européen des brevets

(19)

(11) Veröffentlichungsnummer: **0 234 465**
**B1**

(12)                                   EUROPÄISCHE PATENTSCHRIFT

(45) Veröffentlichungstag der Patentschrift:
05.09.90

(51) Int. Cl.⁵: **F16L 37/08**, F16L 37/24

(21) Anmeldenummer: 87102124.2

(22) Anmeldetag: 14.02.87

(54) Steckverbindungsvorrichtung mit Verdrehsicherung.

(30) Priorität: 18.02.86 DE 3605016

(43) Veröffentlichungstag der Anmeldung:
02.09.87 Patentblatt 87/36

(45) Bekanntmachung des Hinweises auf die Patenterteilung:
05.09.90 Patentblatt 90/36

(84) Benannte Vertragsstaaten:
DE ES FR GB IT NL SE

(56) Entgegenhaltungen:
EP-A- 0 031 409
DE-A- 2 853 281
DE-C- 899 137
GB-A- 1 145 896
GB-A- 2 151 323
US-A- 1 333 342
US-A- 3 245 703
US-A- 3 933 378

(73) Patentinhaber: Armaturenfabrik Hermann Voss GmbH & Co., D-5272 Wipperfürth(DE)

(72) Erfinder: Roesch, Volker, Dr., Elsenborner Weg 37, D-4330 Muelheim/Ruhr(DE)
Erfinder: Hester, Hilmar, Luedenscheider Str. 61, D-5272 Wipperfuerth(DE)

(74) Vertreter: Patentanwälte Dr. Solf & Zapf, Schlossbleiche 20 Postfach 13 01 13, D-5600 Wuppertal 1(DE)

ACTORUM AG

## Beschreibung

Die vorliegende Erfindung betrifft eine Steckverbindungsvorrichtung für Druckmittelleitungen, insbesondere zum Anschluß von Bremsleitungen an einen Bremsventilkörper eines pneumatischen Kraftfahrzeug-Bremssystems, bestehend aus einem Gehäuse und einem in eine Anschlußbohrung des Gehäuses mit seinem Steckerschaft einsteckbaren Stecker mit einer Durchgangsbohrung, wobei der Stecker im Gehäuse durch Halteelemente in axialer Richtung gegen Verschieben fixiert und mittels einer zwischen dem Steckerschaft und dem Gehäuse angeordneten Umfangsdichtung abgedichtet ist, wobei die Halteelemente aus mindestens zwei am Außenumfang des Steckerschaftes angeordneten, mit dem Stecker verdrehfest verbundenen, in radialer Richtung federelastischen Rastzungen bestehen, die sich parallel oder schräg zur Steckerlängsachse erstrecken und im eingesteckten Zustand des Steckers Rastkanten des Gehäuses formschlüssig hintergreifen.

Die GB-A 1 145 896 beschreibt eine Kupplung für Flüssigkeitsleitungen, die aus einem Stecker und einer Buchse besteht, wobei der Stecker zwei Rastarme besitzt, die in axialer Richtung in jeweils eine Öffnung der Buchse eingreifen und mit Rastkanten Kanten der Buchse rastend hintergreifen. Hierdurch wird jedoch allenfalls in axialer Richtung ein Formschluß erreicht, da die Öffnungen in umfänglicher Richtung der Kupplung einen derart weiten Öffnungsquerschnitt besitzen, daß die einen sehr viel geringeren Querschnitt aufweisenden Rastarme mit einem derartigen umfänglichen Spiel in die Öffnungen eingreifen, daß der Stecker und die Buchse sich zumindest über einige Winkelgrade gegeneinander verdrehen können. Jedoch kann auch eine derartige, relativ geringe Verdrehung insbesondere im fortgesetzten Wiederholungsfall zu einer erhöhten Beanspruchung von Dichtungselementen sowie der aus Kunststoff bestehenden Steckverbindungsteile selbst und auch der angeschlossenen (Kunststoff-) Leitung(en) führen, so daß hier die Gefahr von Undichtigkeiten vorhanden ist. Ferner ist bei der bekannten Kupplung von Nachteil, daß sich der Stecker ungewollt von der Buchse lösen kann, da ein (ungewolltes) radiales Zusammendrücken der Rastarme nicht ausgeschlossen ist.

Der vorliegenden Erfindung liegt die Aufgabe zugrunde, die bekannte Steckverbindungsvorrichtung derart zu verbessern, daß die vorstehenden Nachteile nicht auftreten und eine Festlegung des Steckers im Gehäuse gegen Verdrehung gewährleistet ist, und zwar mit konstruktiv einfachen Mitteln, die insbesondere für die Herstellung in Verbindung mit Kunststoffteilen geeignet sind. Weiterhin soll eine einfache Steckbarkeit des Steckers in das Gehäuse gewährleistet sein.

Erfindungsgemäß wird dies dadurch erreicht, daß der Stecker in dem Gehäuse durch die Rastzungen dadurch gegen Verdrehen fixiert ist, daß die Rastzungen formschlüssig in Durchbrüche des Gehäuses einrasten, wobei sich die Rastzungen entgegengesetzt zur Einsteckrichtung des Steckers erstrecken, und wobei in in radialer Richtung zwischen dem Steckerschaft, dem Gehäuse und den Rastzungen gebildete Zwischenräume in axialer Richtung Fortsätze einer in Stecker-Einsteckrichtung auf das Gehäuse aufgeschobenen Sicherungskappe eingreifen.

Erfindungsgemäß sind demnach die Abmessungen der Rastzungen derart an den Öffnungsquerschnitt der Durchbrüche angepaßt, daß ein Verdrehen des Steckers in dem Gehäuse absolut ausgeschlossen ist. Die sich von der aus der GB-A 1 145 896 bekannten Kupplung unterscheidende, erfindungsgemäße Anordnung bzw. Ausrichtung der Rastzungen "entgegengesetzt zur Einsteckrichtung des Steckers " ermöglicht es, die Sicherungskappe vorzusehen, die erfindungsgemäß mit ihren Fortsätzen in axialer Richtung in die zwischen dem Steckerschaft und den Rastzungen gebildeten Zwischenräume eingreift. Die Fortsätze verhindern hierdurch, daß die Rastzungen radial nach innen einfedern können, d.h. die Rastzungen werden erfindungsgemäß in ihrer Einraststellung fixiert.

Vorteilhafte Ausgestaltungen der Erfindung sind in den Unteransprüchen enthalten.

Anhand der in den beiliegenden Zeichnungen dargestellten Ausführungsbeispiele wird die Erfindung nunmehr näher erläutert. Es zeigen:

Fig. 1 in der unteren und oberen Hälfte jeweils einen Teil-Längsschnitt durch eine erste Ausführungsform einer erfindungsgemäßen Steckverbindungsvorrichtung, wobei in der unteren Hälfte die zugehörige Sicherungskappe noch nicht aufgesteckt ist.

Fig. 2 einen Querschnitt entlang der Schnittlinie II–II in Fig. 1,

Fig. 3 in der unteren und oberen Hälfte jeweils einen Teil-Längsschnitt durch ein zweites Ausführungsbeispiel einer erfindungsgemäßen Steckverbindungsvorrichtung, wobei in der unteren Hälfte die zugehörige Sicherungskappe noch nicht aufgesteckt ist und

Fig. 4 einen Querschnitt entlang der Schnittlinie IV–IV in Fig. 3.

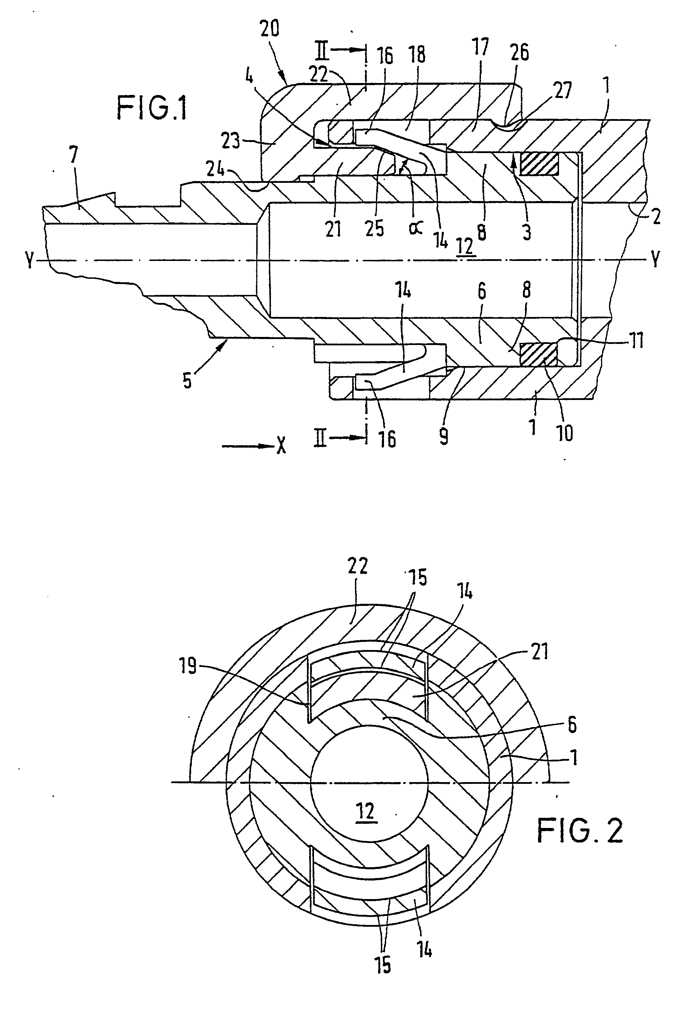

Wie in Fig. 1 dargestellt ist, besteht eine erfindungsgemäße Steckverbindungsvorrichtung aus einem Gehäuse 1, insbesondere dem Gehäuse eines Ventilkörpers. In diesem Gehäuse 1 befinden sich eine oder mehrere Anschlußbohrungen 2, die einen im Durchmesser vergrößerten Aufnahmeabschnitt 3 aufweisen, der in einer Einsteköffnung 4 an der Gehäuseaußenseite endet. Die Steckverbindungsvorrichtung umfaßt weiterhin einen Stecker 5. Dieser Stecker 5 weist einendig einen Steckerschaft 6 und anderendig einen Anschlußdorn 7 für eine Druckmittelleitung, z.B. eine Bremsleitung eines pneumatischen Kraftfahrzeug-Bremssystems, auf. Der Steckerschaft 6 ist in den Aufnahmeabschnitt 3 einsteckbar und besitzt einen in Einsteckrichtung, siehe Pfeil X, gesehen vorderen Schaftbereich 8 mit rundem Querschnitt, dessen Außendurchmesser etwa dem Innendurchmesser eines diesem Schaftbereich 8 zugeordneten Führungsabschnittes 9 des Aufnahmeabschnittes 3 entspricht. Auf der Mantelfäche des vorderen Schaftbereichs 8 ist eine Umfangsdichtung aus einem O-Dichtring 10 und einer diesen aufnehmenden Ringnut 11 angeordnet, die die Steckverbindung nach außen abdichtet. Der Stecker 6 besitzt eine Durchgangsbohrung 12, die im eingesteckten Zustand des Steckers gleichachsig zur Anschlußbohrung 2 verläuft. Die Steckverbindungsvorrichtung ist als Kunststoffverbindung ausgebildet, d.h. sowohl das Gehäuse 1 als auch der Stecker 5 bestehen aus Kunststoff. Wesentlich ist, daß bei derartigen Kunststoffverbindungen sichergestellt wird, daß der Stecker 6 im Gehäuse 1 verdrehsicher im eingesteckten Zustand gehalten wird. Hierzu weist der Stecker 5 zwei Rastzungen 14 auf, die vor dem Schaftbereich 8 am Steckerschaft 6 ausgebildet sind. Diese Rastzungen 14 haben einen etwa rechteckigen Querschnitt mit jedoch kreisbogenförmig verlaufenden Längskanten 15, siehe Fig. 2. Ausgehend vom Steckerschaft 6 erstrecken sie sich unter einem spitzen Winkel $\alpha$ zur Längsachse Y–Y des Steckerschaftes 6 nach außen und weisen an ihrem freien Ende einen parallel zur Steckerlängsachse Y–Y verlaufenden Abschnitt 16 auf. Die beiden Rastzungen 14 sind einander gegenüberliegend am Steckerschaft 6 ausgebildet. Im dargestellten Ausführungsbeispiel sind die Rastzungen 14 am Steckerschaft mit diesem einstückig angeformt. Die Rastzungen 14 sind derart geformt, daß sie in radialer Richtung federelastisch sind. Wie aus Fig. 1 ersichtlich ist, weist das Gehäuse 1 in der Wandung 17 des Aufnahmeabschnittes 3 Durchbrüche 18 auf, in die die Rastzungen 14 im eingesteckten Zustand des Steckers 5 einrasten, weshalb die Durchbrüche 18 in ihrem Öffnungsquerschnitt den Abmessungen der Rastzungen 14 derart angepaßt sind, daß ein Verdrehen des Steckers im Gehäuse nicht möglich ist. Gleichzeitig stellen die Rastzungen 14 auch eine Sicherung gegen axiale Verschiebung des Steckers im Gehäuse dar. Dabei wird die Längsverschiebung einerseits durch die Endflächen der Rastzungen 14 an ihren freien Enden gewährleistet, die mit der gegenüberliegenden Innenfläche des Durchbruches 18 einen Anschlag bilden, und zwar bei einer Zugbeanspruchung des Steckers. Die Lagebegrenzung des Steckers innerhalb des Gehäuses 1 erfolgt durch Anlage der Stirnfläche des Steckers am Bohrungsgrund des Aufnahmeabschnittes 3.

Wie aus den Fig. 1 und 2, jeweils obere Hälfte, zu ersehen ist, befinden sich im Steckerschaft 6 an dessen Umfangsfläche jeweils um 180° zueinander versetzt angeordnete Längsausnehmungen 19, und zwar im Bereich unterhalb der Rastzungen 14. In diese Längsausnehmungen 19 ragen an einer Sicherungskappe 20 angeformte Fortsätze 21, die einen kreisbogenförmigen Querschnitt besitzen. Die Sicherungskappe 20 umfaßt mit ihrer Außenwandung 22 das Gehäuse 1 und weist in ihrem Kappenboden 23 eine Öffnung 24 auf, durch die der Steckerschaft 6 verläuft. Der Durchmesser der Durchtrittsöffnung 24 entspricht etwa dem Außendurchmesser des Steckerschaftes 6 in diesem Schaftbereich. Im aufgeschobenen Zustand der Sicherungskappe 20 auf dem Gehäuse 1 schieben sich die Fortsätze 21 unter die Rastzungen 14, so daß diese nicht radial nach innen einfedern können und somit in ihrer Einraststellung fixiert werden. Zweckmäßigerweise sind die Fortsätze 21 an ihrem freien Ende entsprechend dem Verlauf der Rastzungen 14 abgeschrägt, so daß sich eine Anlagefläche 25 ergibt. Die Sicherungskappe 20 weist zu ihrer unverlierbaren Arretierung auf dem Gehäuse 1 am freien Ende ihrer Außenwandung 22 am inneren Umfang einen Ringwulst 26 auf, der im aufgeschobenen Zustand der Sicherungskappe 20 in eine äußere Umfangsnut 27 des Gehäuses 1 einschnappt, so daß die Sicherungskappe 20 gegen Verschiebung in axialer Richtung gesichert ist. Die Sicherungskappe 20 besteht ebenfalls aus Kunststoff.

Zum Verbinden der erfindungsgemäßen Steckverbindungsvorrichtung braucht demgemäß der Stecker 1 nur in den Aufnahmeabschnitt 3 eingesteckt zu werden, wobei aufgrund der entsprechenden Dimensionierung und Anordnung der Rastzungen 14 diese in die Durchbrüche 18 einrasten, bevor die Stirnfläche des Steckers 5 im Grund des Aufnahmeabschnittes 3 zur Anlage kommen kann. Anschließend wird zur weiteren Absicherung der erfindungsgemäßen Steckverbindung noch die Sicherungskappe 20 unverlierbar aufgeschoben, die auch geichzeitig eine Abdeckung gegen Schmutzeintritt darstellt.

In den Fig. 1 und 2, untere Hälften, ist jeweils die vorgesehene Sicherungskappe 20 nicht dargestellt.

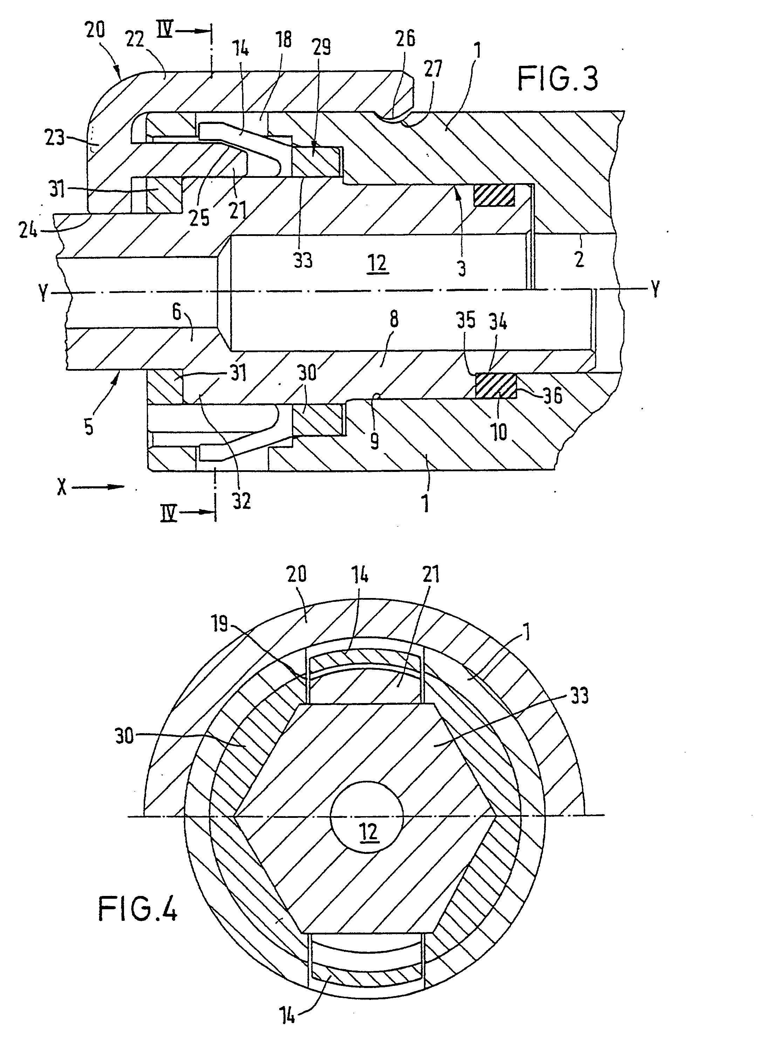

In den Fig. 3 und 4 ist eine alternative Ausführungsform einer erfindungsgemäßen Steckverbindungsvorrichtung dargestellt, wobei die gleichen Teile wie in den Fig. 1 und 2 mit denselben Bezugsziffern versehen sind. Der wesentliche Unterschied zu der Ausführungsform gemäß Fig. 1 und 2 besteht darin, daß die Rastzungen 14 nicht einstückig am Steckerschaft angeformt sind, sondern mit einem separaten Ringstück 29 eine Einheit bilden, die auf den Steckerschaft aufgeschoben ist. Das Ringstück 29 und die Sicherungskappe 20 sitzen gemeinsam unverlierbar auf dem Stecker 5. Dieses Ringstück 29 besteht aus einem Hohlzylinderabschnitt 30 und einem umlaufenden Innenkragen 31, der im aufgeschobenen Zustand gegen eine Stufenfläche 32 des Steckerschaftes 6 anliegt. Der Hohlzylinderabschnitt 30 besitzt einen Innenraum mit sechseckigem Querschnitt und der Steckerschaft 6 weist einen Schaftbereich 33 mit einem dem Innenraum angepaßten, sechseckigen Querschnitt auf, der sich von der Stufenfläche 32 aus entsprechend der Länge des Ringstückes erstreckt. Durch diese Ausbildung wird ein Formschluß zwischen dem Ringstück 29 und dem Steckerschaft 6 aufgrund des Zusammenwirkens von Innensechskant und Außensechskant erreicht, der ein Verdrehen der beiden Teile gegeneinander verhindert. Die Verdrehsicherung des Steckers 5 gegenüber dem Gehäuse 1 wird durch die Rastzungen 14 bewirkt, wie dies bereits zu den Fig. 1 und 2 beschrieben wurde. Auch bewirken die Rastzungen 14 wiederum die axiale Sicherung des Steckers gegen Verschieben, und zwar im Zusammenwirken mit den Anlageflächen des Gehäuses. Im Unterschied zu der Ausführung gemäß den Fig. 1 und 2 sind die Längsausnehmungen 19 für die Aufnahme der Fortsätze 21 nunmehr im Ringstück 29 ausgebildet und nicht im Steckerschaft 6.

In Fig. 3 und 4, untere Hälfte, ist eine Variante in bezug auf die Anordnung der Umfangsdichtung des Steckers 5 ohne Darstellung der Sicherungskappe 20 gezeigt. Hier befindet sich der Dichtring 10 in einem Ringraum 34, der zwischen einer Stufe 35 im Sinne einer Durchmesserverringerung des Steckerschaftes 6 und einer Stufe 36 im Sinne einer Durchmesservergrößerung des Aufnahmeabschnittes 3 gebildet wird. Bei dieser Ausführung erstreckt sich der Steckerschaft 6 bis in die Anschlußbohrung 2 hinein. Das Ringstück ist zweckmäßigerweise ebenfalls aus Kunststoff gefertigt.

Auch hier kann die Verbindung der Steckverbindungsvorrichtung einfach durch Einstecken des Steckers zusammen mit dem aufgeschobenen Ringstück erfolgen, wobei eine mittelbare Formschlußverbindung mit dem Gehäuse über das Ringstück erfolgt. Dabei wird ebenfalls durch einfaches Einstecken sowohl die Verdrehsicherung als auch die Verschiebesicherung in axialer Richtung erreicht.

## Patentansprüche

1. Steckverbindungsvorrichtung für Druckmittelleitungen, insbesondere zum Anschluß von Bremsleitungen an einen Bremsventilkörper eines pneumatischen Kraftfahrzeug-Bremssystems, bestehend aus einem Gehäuse (1) und einem in eine Anschlußbohrung (2) des Gehäuses (1) mit seinem Steckerschaft (6) einsteckbaren Stecker (5) mit einer Durchgangsbohrung (12), wobei der Stecker (5) im Gehäuse (1) durch Halteelemente in axialer Richtung gegen Verschieben fixiert und mittels einer zwischen dem Steckerschaft (6) und dem Gehäuse (1) angeordneten Umfangsdichtung (10) abgedichtet ist, wobei die Halteelemente aus mindestens zwei am Außenumfang des Steckerschaftes (6) angeordneten, mit dem Stecker (5) verdrehfest verbundenen, in radialer Richtung federelastischen Rastzungen (14) bestehen, die sich parallel oder schräg zur Steckerlängsachse (Y-Y) erstrecken und im eingesteckten Zustand des Steckers (5) Rastkanten des Gehäuses (1) formschlüssig hintergreifen, dadurch gekennzeichnet, daß der Stecker (5) in dem Gehäuse (1) durch die Rastzungen (14) dadurch gegen Verdrehen fixiert ist, daß die Rastzungen (14) formschlüssig in Durchbrüche (18) des Gehäuses (1) einrasten, wobei sich die Rastzungen (14) entgegengesetzt zur Einsteckrichtung (X) des Steckers (5) erstrecken, und wobei in in radialer Richtung zwischen dem Steckerschaft (6), dem Gehäuse (1) und den Rastzungen (14) gebildete Zwischenräume in axialer Richtung Fortsätze (21) einer in Stecker-Einsteckrichtung (X) auf das Gehäuse (1) aufgeschobenen Sicherungskappe (20) eingreifen.

2. Steckverbindungsvorrichtung nach Anspruch 1, dadurch gekennzeichnet, daß die Rastzungen (14) zur Steckerlängsachse (Y-Y) schräg radial nach außen geneigt verlaufen.

3. Steckverbindungsvorrichtung nach Anspruch 1 oder 2, dadurch gekennzeichnet, daß die Rastzungen (14) einstückig mit dem Steckerschaft (6) verbunden sind.

4. Steckverbindungsvorrichtung nach Anspruch 1 oder 2, dadurch gekennzeichnet, daß die Rastzungen (14) mit einem Ringstück (29) einstückig verbunden sind, das unter Formschluß auf dem Steckerschaft (6) sitzt.

5. Steckverbindungsvorrichtung nach Anspruch 3 oder 4, dadurch gekennzeichnet, daß die die Fortsätze (21) der Sicherungskappe (20) aufnehmenden Zwischenräume als Längsausnehmungen (19) in dem Steckerschaft (6) oder in dem Ringstück (29) ausgebildet sind.

6. Steckverbindungsvorrichtung nach einem oder mehreren der Ansprüche 1 bis 5, dadurch gekennzeichnet, daß die Sicherungskappe (20) eine das Gehäuse (1) umfassende Außenwandung (22) sowie einen eine Einstecköffnung (4) des Gehäuses (1) abdeckenden Kappenboden (23) mit einer Durchführöffnung (24) für den Stecker (5) aufweist.

7. Steckverbindungsvorrichtung nach einem oder mehreren der Ansprüche 1 bis 6, dadurch gekennzeichnet, daß die Fortsätze (21) der Sicherungskappe (20) an ihren freien Enden an den Verlauf der Rastzungen (14) angepaßte und diesen zugekehrte Anlageflächen (25) aufweisen.

8. Steckverbindungsvorrichtung nach Anspruch 6 oder 7, dadurch gekennzeichnet, daß auf der Innenseite der Außenwandung (22) der Sicherungskappe (20) an dem dem Kappenboden (23) gegenüberliegenden Ende eine Ringwulst (26) ausgebildet ist, die im aufgeschobenen Zustand der Sicherungskappe (20) in einer Umfangsnut (27) des Gehäuses (1) eingerastet ist.

## Revendications

1. Dispositif de raccord par enfichage pour conduits de pression, en particulier pour raccorder des conduits de freinage à un corps de clapet de freinage d'un système de freinage pneumatique de véhicules à moteur, comprenant un boîtier (1) et une prise (5) dont l'embout (6) peut être enfiché dans l'alésage de raccord (2) du boîtier (1) et présentant un alésage traversant (12), la prise (5) étant bloquée dans le boîtier (1) par des éléments de maintien dans la direction axiale pour éviter son déplacement et rendue étanche au moyen d'un joint circonférentiel (10) disposé entre l'embout (6) et le boîtier (1), les éléments de maintien consistant en au moins deux languettes d'arrêt (14) élastiques dans la direction radiale, disposées sur la circonférence extérieure de l'embout (6) et raccordées à la prise (5) de manière à résister à une torsion, ces languettes s'étendant parallèlement ou obliquement à l'axe longitudinal (Y-Y) de la prise et s'insérant sans jeu derrière des bords d'arrêt du boîtier (1) lorsque la prise (5) est enfichée, caractérisé en ce que la prise (5) est bloquée dans le boîtier (1) au moyen des languettes d'arrêt (14) de manière à résister à une torsion du fait que les languettes d'arrêt (14) s'engagent sans jeu dans des ouvertures (18) du boîtier (1), les languettes d'arrêt (14) s'étendant dans la direction opposée à la direction d'enfichage (X) de la prise (5), des prolongements (21) d'un capot de sécurité (20) glissé sur le boîtier dans la direction d'enfichage (X) de la prise s'engageant dans la direction axiale dans des intervalles ménagés dans la direction radiale entre l'embout (6), le boîtier (1) et les languettes d'arrêt (14).

2. Dispositif de raccord par enfichage selon la revendication 1, caractérisé en ce que les languettes d'arrêt (14) s'étendent obliquement vers l'extérieur par rapport à l'axe longitudinal (Y–Y) de la prise.

3. Dispositif de raccord par enfichage selon la revendication 1 ou 2, caractérisé en ce que les languettes d'arrêt (14) sont reliées à l'embout (6) de manière à ne former qu'une pièce avec celui-ci.

4. Dispositif de raccord par enfichage selon la revendication 1 ou 2, caractérisé en ce que les languettes d'arrêt (14) sont reliées sans raccord à un élément annulaire (29) qui est placé sans jeu sur l'embout (6).

5. Dispositif de raccord par enfichage selon la revendication 3 ou 4, caractérisé en ce que les intervalles recevant les prolongements (21) du capot de sécurité (20) ont la forme d'évidements longitudinaux (19) pratiqués dans l'embout (6) ou dans l'élément annulaire (29).

6. Dispositif de raccord par enfichage selon l'une ou plusieurs des revendications 1 à 5, caractérisé en ce que le capot de sécurité (20) présente une paroi extérieure (22) entourant le boîtier (1), ainsi qu'un fond (23) couvrant une ouverture d'enfichage (4) du boîtier (1) et muni d'une ouverture de passage (24) pour la prise (5).

7. Dispositif de raccord par enfichage selon l'une ou plusieurs des revendications 1 à 6, caractérisé en ce que les prolongements (21) du capot de sécurité (20) possèdent à leurs extrémités libres des faces d'appui (25) adaptées à la configuration des languettes d'arrêt (14) et disposées en regard de celles-ci.

8. Dispositif de raccord par enfichage selon la revendication 6 ou 7, caractérisé par le fait que sur la face interne de la paroi extérieure (22) du capot de sécurité (20) à l'extrémité située en regard du fond (23) un renflement annulaire (26) a été réalisé que s'engage dans une rainure circonférentielle (27) du boîtier (1) lorsque le capot de sécurité (20) a été mis en place.

**Claims**

1. Plug-in connection device for pressurized medium lines, in particular for connecting brake lines to a brake valve body of a pneumatic motor vehicle braking system, comprising a housing (1) and an insert (5) which is insertable in a connection bore (2) of the housing (1) by means of its insert shaft (6) and which has a through bore (12), the insert (5) being fixed undisplaceably in the axial direction in the housing (1) by holding elements and being sealed by means of a peripheral seal (10) arranged between the insert shaft (6) and the housing (1), the holding elements comprising at least two radially resilient latching tongues (14) arranged on the outer periphery of the insert shaft (6) and connected to the insert (5) non-rotatably, these latching tongues (14) extending parallel or obliquely to the longitudinal axis (Y–Y) of the insert and gripping positively behind latching edges of the housing (1) in the inserted state, characterized in that the insert (5) is fixed non-rotatably in the housing (1) by the latching tongues (14) in that the latching tongues (14) latch positively in apertures (18) in the housing (1), the latching tongues (14) extending in opposition to the insertion direction (X) of the insert (5), and with extensions (21) to a securing cap (20) pushed onto the housing (1) in the insertion direction (X) of the insert engaging in the axial direction in intermediate spaces which are formed in the radial direction between the insert shaft (6), the housing (1) and the latching tongues (14).

2. Plug-in connection device according to Claim 1, characterized in that the latching tongues (14) extend in a manner inclined obliquely radially outwards with respect to the longitudinal axis (Y–Y) of the insert.

3. Plug-in connection device according to Claim 1 or 2, characterized in that the latching tongues (14) are connected as a single piece to the insert shaft (6).

4. Plug-in connection device according to claim 1 or 2, characterized in that the latching tongues (14) are connected as a single piece to an annular part (29) seated positively on the insert shaft (6).

5. Plug-in connection device according to Claim 3 or 4, characterized in that the intermediate spaces receiving the extensions (21) to the securing cap (20) are formed as longitudinal recesses (19) in the insert shaft (6) or in the annular part (29).

6. Plug-in connection device according to one or more of claims 1 to 5, characterized in that the securing cap (20) has an outer wall (22) surrounding the housing (1) and a cap base (23) which covers an insertion opening (4) in the housing (1) and which has a through-guide opening (24) for the insert (5).

7. Plug-in connection device according to one or more of Claims 1 to 6, characterized in that the extensions (21) to the securing cap (20) have at their free ends bearing surfaces (25) adapted to the profile of the latching tongues (14) and facing these.

8. Plug-in connection device according to claim 6 or 7, characterized in that there is formed on the inside of the outer wall (22) of the securing cap (20) at the end opposite the cap base (23) an annular bulge (26) which is latched in the pushed-on state of the securing cap (20) in a peripheral groove (27) of the housing (1).

FIG.1

FIG.2

FIG.3

FIG.4